(19) Europäisches Patentamt
European Patent Office
Office européen des brevets

(11) **EP 2 605 037 B1**

(12) **FASCICULE DE BREVET EUROPEEN**

(45) Date de publication et mention de la délivrance du brevet:
**19.02.2020 Bulletin 2020/08**

(51) Int Cl.:
***G01S 13/60*** *(2006.01)*   ***G01S 13/87*** *(2006.01)*
***G01S 13/91*** *(2006.01)*   ***G08G 5/02*** *(2006.01)*

(21) Numéro de dépôt: **12196604.8**

(22) Date de dépôt: **11.12.2012**

(54) **Système d'assistance au pilotage d'un aéronef, notamment d'aide à l'atterrissage, à l'appontage et à la navigation**

Assistenzsystem zum Steuern eines Luftfahrzeugs, insbesondere als Hilfe bei der Landung, der Decklandung und der Kursführung

System for assisted piloting of an aircraft, in particular a means for assisted landing and navigation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1103890**

(43) Date de publication de la demande:
**19.06.2013 Bulletin 2013/25**

(73) Titulaire: **Thales**
**92400 Courbevoie (FR)**

(72) Inventeurs:
• **Mazeau, Thierry**
**33400 TALENCE (FR)**

• **Garrec, Patrick**
**33700 MERIGNAC (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A1- 2 237 067   WO-A1-2011/012102
US-A- 3 088 109   US-A- 3 185 981
US-A- 3 239 837   US-A- 3 362 024
US-A- 4 027 838   US-A1- 2003 102 999

**Description**

La présente invention concerne un système d'assistance au pilotage d'un aéronef, notamment d'aide à l'atterrissage, à l'appontage et à la navigation. L'invention s'inscrit dans le domaine de l'aéronautique, et peut notamment s'appliquer à des aéronefs tels que des hélicoptères ou des drones.

Les missions courantes pour des aéronefs tels que des hélicoptères par exemple, peuvent être facilitées par la mise en œuvre de différentes fonctions d'assistance au pilotage.

En premier lieu, des fonctions d'aide à la navigation permettent de mesurer et déterminer la route de l'aéronef vers des destinations ou des points de cheminement.

Un aéronef tel qu'un hélicoptère peut également embarquer des fonctions permettant d'assurer un vol stationnaire asservi, permettant de rester en vol au-dessus d'un point fixe, par exemple pour des missions telles que des hélitreuillages, la préparation d'une phase d'atterrissage sur une zone fixe ou une plateforme mobile, le secours à personnes, etc.

Il peut également être précieux qu'un aéronef tel qu'un hélicoptère soit équipé de fonctions d'aide à l'atterrissage, permettant notamment d'estimer la distance entre l'hélicoptère et le sol, les inclinaisons de la zone d'atterrissage de manière à éviter que l'hélicoptère soit déséquilibré lors de la pose, le centre de gravité d'un hélicoptère étant situé à une position relativement haute de l'appareil. Idéalement, une fonction d'aide à l'atterrissage doit permettre au pilote d'apprécier les pentes de la surface d'atterrissage et par exemple les visualiser sur un écran, la visualisation directe de la surface d'atterrissage pouvant être altérée par un écran de poussière lors de la descente, ce phénomène étant communément désigné par le terme anglais « brownout ». Idéalement, une fonction d'aide à l'atterrissage doit être conçue pour également faciliter l'atterrissage sur des sols ou des objets présentant des aspérités, ou des configurations compromettant la stabilité de l'hélicoptère au sol. Egalement, il peut être souhaitable qu'une fonction d'aide à l'atterrissage facilite l'atterrissage sur des plateformes mouvantes, par exemple des bateaux ou des véhicules roulants. Les hélicoptères doivent en effet parfois atterrir sur des zones très précises, parfois mobiles et/ou sans visibilité.

En ce qui concerne les fonctions d'aide à la navigation, les hélicoptères utilisent d'une manière typique des systèmes désignés par le sigle AHRS correspondant à la terminologie anglaise « Attitude and Heading Reference Systems » délivrant des informations relatives à l'attitude et au cap de l'aéronef, à partir de mesures issues de gyroscopes ou de centrales inertielles de différentes classe B, les informations étant par exemple affichées sur au moyen d'un dispositif intégré du type désigné suivant le sigle IESI correspondant à la terminologie anglaise « Integrated Electronic Standby Instrument ». L'AHRS peut être associé à des capteurs anémo-barométriques, à un dispositif de positionnement par satellites de type GNSS, suivant le sigle correspondant à la terminologie anglaise « Global Navigation Satellite System » et des radioaltimètres, fonctionnement typiquement en bande C ou utilisant un faisceau laser.

En ce qui concerne les fonctions permettant d'assurer un vol stationnaire asservi, la position fixe d'un hélicoptère ne peut pas être asservie sur les données issues de capteurs d'accélérations ou de gyromètres ; en effet, un hélicoptère peut par exemple dériver à vitesse constante, donc avec une orientation constante et une accélération nulle, c'est-à-dire non détectable par ce type de capteurs. Les informations fournies par un récepteur GNSS ne permettent pas non plus d'assurer un vol stationnaire avec une qualité suffisante, le rafraichissement des données et l'intégrité des données n'étant pas compatibles de cette fonction critique au niveau de la sécurité des personnes. Des dispositifs connus de type radars de navigation, communément désignés par le sigle RDN, permettent d'assurer un vol stationnaire, à partir de données issues de capteurs de vitesses selon trois axes en se basant sur la vitesse sol. En outre, le traitement du signal de systèmes RDN est basé sur l'utilisation d'une boucle de phase, permettant de sélectionner et filtrer la raie utile du signal avant que celle-ci soit mesurée en fréquence et traitée. Ce principe nécessite un pré-positionnement en fréquence de la boucle de phase pour sélectionner la bonne raie. Cette gestion de la boucle de phase requiert des moyens de calcul complexes, et présente un certain nombre de risques, notamment lorsque l'aéronef survole des zones de mer calme, impliquant que l'énergie reçue par les lobes secondaires des antennes est supérieure à celle reçue par le lobe principal.

La littérature disponible, traitant de l'état de la technique relatif à l'invention, comprend différents document traitant de moyens de mesures embarqués, des moyens radar en particulier, permettant de déterminer la position, la vitesse et éventuellement l'altitude et l'attitude d'un aéronef par rapport au sol, en utilisant les signaux réfléchis par le sol consécutivement à l'émission d'au moins trois faisceaux radar distincts.

Parmi ces documents on peut citer notamment les publications de brevets et demandes de brevets US3,362,024A, US2003/102999 A1, US3,239,837A, US3,185,981A et US3,088,109A. Cependant, aucun de ces documents ne décrit de moyens autonomes permettant d'utiliser les informations ainsi déterminées pour sécuriser l'approche d'un aéronef de sa zone d'atterrissage, sur le sol ou sur une plateforme, ni pour sécuriser l'opération d'atterrissage proprement dite en particulier dans le cas d'un atterrissage sur une plateforme mouvante.

En ce qui concerne les fonctions d'aide à l'atterrissage, il n'existe aucun système autonome connu permettant une telle fonction pour les hélicoptères.

S'agissant de moyens d'aide à l'appontage le document de brevet EP2 237 067 A1 divulgue un système d'aide à l'appontage d'aéronefs, notamment d'aéronefs autonomes, comportant des moyens pour prédire les mouvements de la plateforme d'atterrissage. Cependant la mise en œuvre du système implique le déploiement sur la plateforme d'un dispositif équipé de détecteurs passifs configurés pour recevoir un signal émis par l'aéronef, ledit dispositif déterminant la position de l'aéronef par rapport à la plateforme et transmettant en retour à l'aéronef des commandes de vols prenant en compte la position courante de l'aéronef et les mouvements prédits de la plateforme. Le système décrit suppose donc, en phase d'appontage en particulier, que l'aéronef applique les instructions (les commandes) de vol définies par des équipements externes situés au niveau de la plateforme.

Ainsi les fonctions précitées peuvent être souhaitables dans le cadre d'assistance au pilotage d'aéronefs, notamment d'hélicoptères, et sont pour certaines d'entre elles mises en œuvre dans des dispositifs connus distincts, voire inexistantes.

Un but de la présente invention est de remédier à cet inconvénient, en proposant un système d'assistance au pilotage pour aéronef intégrant toutes les fonctions précitées.

L'invention est définie par la revendication indépendante 1. Des autres aspects de l'invention sont définis par les revendications dépendantes.

Un avantage de la présente invention dans les différents modes de réalisation décrits est qu'elle offre un système unique dédié pour assurer toutes les fonctions, celles-ci pouvant être avantageusement redondées avec des fonctions existantes.

Un autre avantage de la présente invention dans les différents modes de réalisation décrits est qu'elle offre un système autonome, ne requérant pas l'installation de bases au sol, et notamment indépendante de systèmes de navigation par satellites.

Un autre avantage de la présente invention est conféré par le caractère indépendant et configurable des voies d'émission et de réception, permettant de répondre au problème double visant à conférer à un système d'assistance à la fois une bonne résilience et une bonne précision, pour notamment permettre d'assurer des fonctions d'aide à l'appontage ou à l'atterrissage, y compris sur des zones en mouvement ou des zones escarpées, par exemple.

Un autre avantage de la présente invention dans les différents modes de réalisation décrits est qu'elle offre un système capable de fonctionner quelques soient les conditions atmosphériques, et notamment dans des conditions de brownout.

D'autres caractéristiques et avantages de l'invention apparaîtront à la lecture de la description, donnée à titre d'exemple, faite en regard des dessins annexés qui représentent :

- la figure 1, une vue en perspective illustrant de manière synoptique un aéronef équipé d'un système d'assistance au pilotage selon un exemple de réalisation de l'invention ;
- la figure 2, un diagramme illustrant de manière synoptique un système d'assistance au pilotage selon un exemple de réalisation de l'invention ;
- la figure 3, un diagramme illustrant de manière synoptique des voies d'émission et de réception d'un système d'assistance au pilotage selon un exemple de réalisation de l'invention ;
- la figure 4, une courbe illustrant la forme d'onde d'un signal émis par un système d'assistance au pilotage selon un exemple de réalisation de l'invention ;
- la figure 5, des courbes illustrant les formes d'ondes d'un signal émis et d'un signal reçu par un système d'assistance au pilotage selon un exemple de réalisation de l'invention ;
- la figure 6, un diagramme illustrant de manière synoptique un bloc de traitement du signal compris dans une voie de réception d'un système d'assistance au pilotage selon un exemple de réalisation de l'invention ;
- la figure 7, un diagramme illustrant de manière synoptique un bloc de réception multivoies dans un système d'assistance au pilotage selon un exemple de réalisation de l'invention ;
- la figure 8, un diagramme illustrant de manière synoptique un bloc de traitement de l'information compris dans un système d'assistance au pilotage selon un exemple de réalisation de l'invention ;
- la figure 9, un diagramme temporel illustrant un premier exemple de séquencement d'opérations dans un système d'assistance au pilotage selon la présente invention ;
- la figure 10, un diagramme temporel illustrant un deuxième exemple de séquencement d'opérations dans un système d'assistance au pilotage selon la présente invention.

Il est proposé par la présente invention d'équiper un aéronef d'un système d'assistance au pilotage permettant d'associer des mesures des vitesses et des distances de l'aéronef par rapport au sol, suivant trois axes distants. Les mesures peuvent être réalisées par un radar comprenant des moyens de traitement permettant d'extraire les données de distances et de vitesses simultanément, pour chaque éclairement.

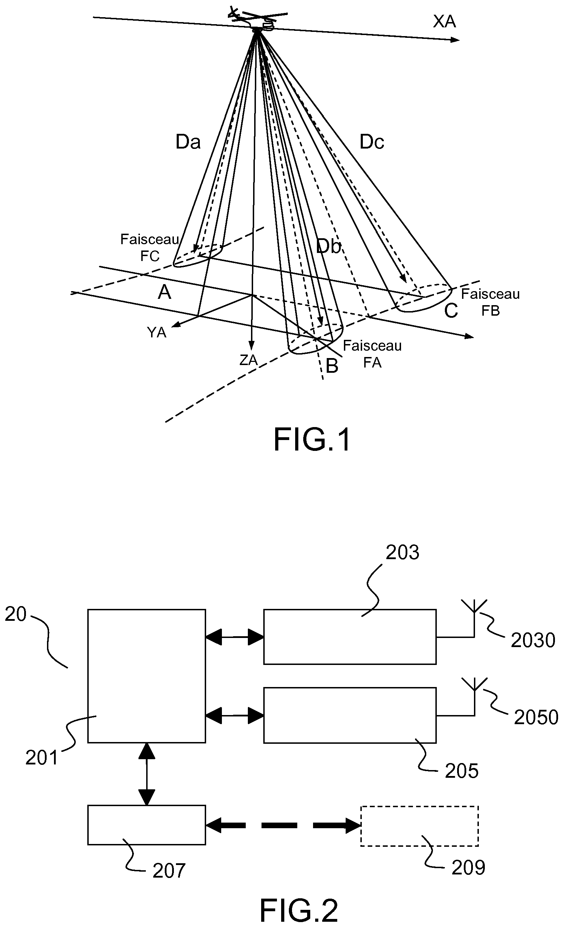

La figure 1 présente une vue en perspective illustrant de manière synoptique un aéronef équipé d'un système d'assistance au pilotage selon un exemple de réalisation de l'invention.

Dans l'exemple illustré par la figure 1, l'aéronef est un hélicoptère 1 dont la structure forme un axe longitudinal principal XA et embarquant un système d'assistance au pilotage selon la présente invention. Le système d'assistance au pilotage comprend des moyens de mesure aptes à réaliser des mesures de distances de l'aéronef par rapport au sol, et des mesures de vitesses de l'aéronef par rapport au sol sur au moins trois voies correspondant à au moins trois axes Da, Db et Dc respectifs. Selon la présente invention, les trois voies utilisées en émission et en réception sont indépendantes. Notamment l'indépendance des voies utilisées en émission permet une plus grande souplesse, et de réaliser des temps d'éclairement plus important pour une meilleure précision de mesure. Les moyens de mesure peuvent par exemple être formés par un radar comprenant une antenne d'émission et une antenne de réception, ces deux antennes pouvant avantageusement ne former qu'une seule structure d'antenne. Les voies d'émission peuvent être configurées pour former suivant les axes Da, Db et Dc respectivement trois faisceaux d'émission FA, FB et FC éclairant le sol en trois zones d'éclairement ou « spots » A, B et C. Les orientations des axes Da, Db, Dc peuvent par exemple présenter une axisymétrie par rapport à un axe vertical principal ZA de l'hélicoptère 1, perpendiculaire à l'axe longitudinal principal XA.

La figure 2 présente un diagramme illustrant de manière synoptique un système d'assistance au pilotage selon un exemple de réalisation de l'invention.

Un système d'assistance au pilotage comprend un système radar 20, par exemple un radar de type radar Doppler, comprenant un module de gestion radar 201 permettant de réaliser le traitement, le séquencement, les interfaces et les configurations opérationnelles du système radar 20. L'utilisation d'un système radar, fonctionnement dans des bandes de fréquences telles que par exemple la bande X, permet d'assurer un bon fonctionnement du système d'assistance au pilotage, quelles que soient les conditions atmosphériques, et dans des situations de brownout.

Le module de gestion radar 201 échange des données avec un module d'émission 203, lui-même relié à au moins une antenne d'émission 2030. Le module d'émission 203 comprend notamment des modules de génération de forme d'ondes dits « GFO ». Les GFO génèrent les ondes d'émission ainsi que les ondes locales utilisées pour les transpositions en fréquences, ainsi que cela est décrit en détails ci-après. Les GFO sont par exemple formés par des générateurs numériques de fréquences programmables. Le module d'émission 203 comprend également des blocs hyperfréquences, réalisant notamment des fonctions de filtrage et d'amplification/atténuation.

Le module de gestion radar 201 échange également des données avec un module de réception 205, lui-même relié à au moins une antenne de réception 2050. Le module de réception 205 comprend des blocs hyperfréquences, réalisant notamment des fonctions de filtrage et d'amplification/atténuation, ainsi que des blocs de traitement numérique du signal. Le traitement peut être réalisé à base de transformées rapides de Fourier ou « FFT » (Fast Fourier Transform) : de la sorte, il est permis d'éviter les risques d'erreur de pré-positionnement en fréquence inhérents à des systèmes utilisant une boucle de phase, ainsi que cela est décrit précédemment.

Le module de gestion radar 201 échange également des données avec un module d'interface 207, permettant d'interfacer le système radar 20 avec une interface homme-machine ou « IHM » 209 par exemple, et/ou avec un système de pilote automatique de l'aéronef, non représenté sur la figure.

La mission principale du système radar 20 est de déterminer la vitesse de l'aéronef suivant ses trois axes de déplacement Ox, Oy, Oz, ainsi que sa hauteur par rapport au sol, simultanément. Il permet de déterminer les vitesses suivant ces trois axes de déplacement, ainsi que les distances de l'aéronef par rapport aux points d'intersections des axes d'émission précités Da, Db, Dc, par une mesure de décalage en fréquence ou « offset de fréquence » et du retard du signal écho par rapport au signal émis vers le sol.

Le module d'émission 203 et le module de réception 205 sont des modules multivoies, le nombre de voies correspondant au nombre de faisceaux du radar, par exemple trois. Chaque voie d'émission ou de réception est indépendante et peut être associée au nombre correspondant d'antennes d'émission ou de réception. Toutes les antennes peuvent également être co-localisées. Une méthode permettant de faire de l'émission réception simultanée par la même antenne est aussi possible.

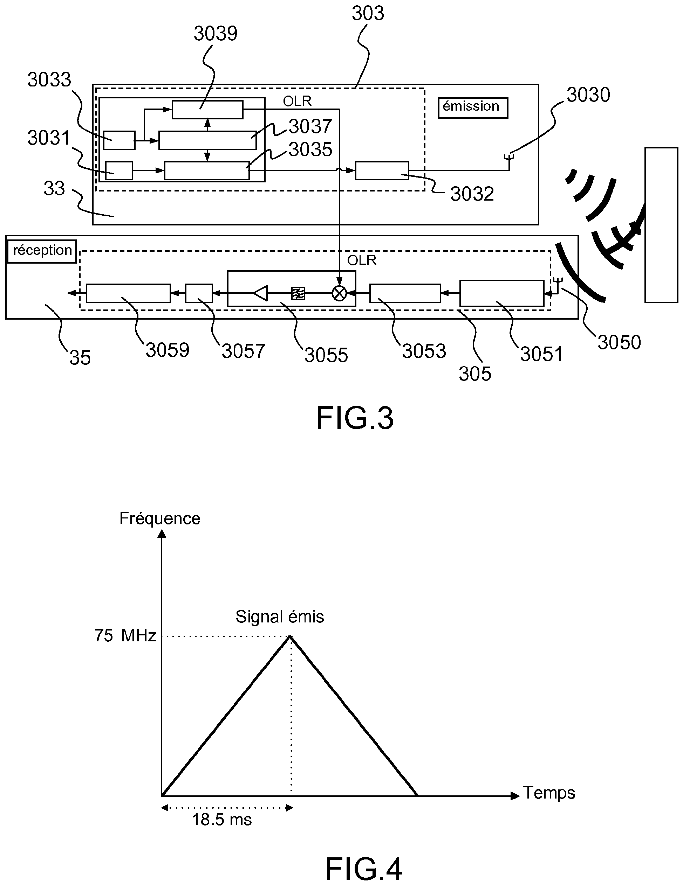

La figure 3 présente un diagramme illustrant de manière synoptique des voies d'émission et de réception d'un système d'assistance au pilotage selon un exemple de réalisation de l'invention.

Une voie d'émission 33 comprend un module d'antenne d'émission 3030, pouvant être formé par une antenne dédiée à cette voie ou bien être compris dans une antenne d'émission commune à plusieurs voies, et un module d'émission 303, compris dans le module d'émission 203 décrit précédemment en référence à la figure 2.

D'une manière similaire, une voie de réception 35 comprend un module d'antenne de réception 3050, pouvant être formé par une antenne dédiée à cette voie ou bien être compris dans une antenne d'émission commune à plusieurs voies, et un module de réception 305, compris dans le module de réception 205 décrit précédemment en référence à la figure 2.

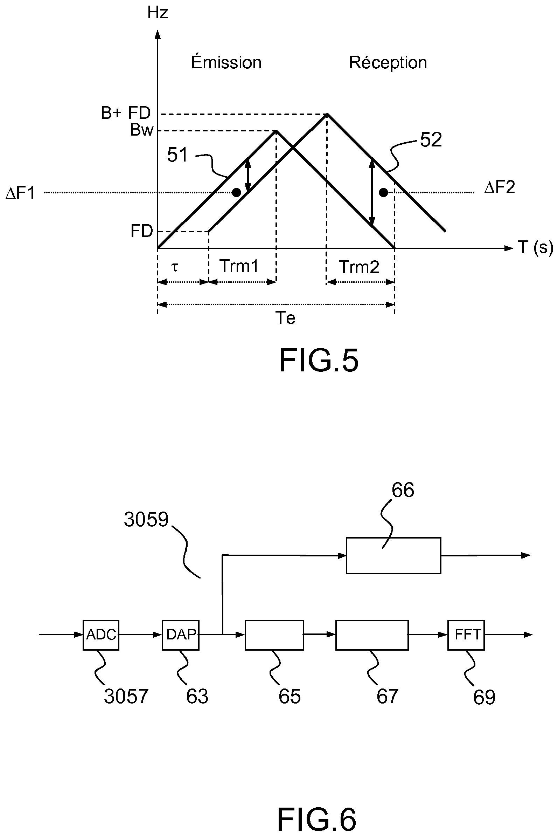

Une voie d'émission 33 peut comprendre un GFO 3031 permettant de modifier, en fonction de la mission du pilote de l'aéronef par exemple, la modulation des ondes émises, par exemple des caractéristiques des rampes de fréquences, les formes d'ondes étant décrites ci-après en référence aux figures 4 et 5. Chaque voie d'émission 33 est indépendante et peut être configurée en fonction de la mission.

Une voie d'émission 33 comprend en outre un oscillateur de référence 3033 générant une fréquence de référence utilisée pour la transposition de fréquences, décrite ci-après. L'oscillateur de référence 3033 est relié à un module de génération de fréquence 3037 et à un module de transposition de la fréquence de référence 3039. Le GFO 3031 est relié à un module de transposition hyperfréquence 3035. Le module de transposition hyperfréquence 3035 génère le signal hyperfréquence à partir de la fréquence générée par le module de génération de fréquence 3037. Le module de transposition de la fréquence de référence 3039 génère une onde OLR (Oscillateur Local de référence) permettant la transposition du signal reçu en écho, ainsi que cela est décrit ci-après. Un atténuateur 3032 peut être disposé entre le module de transposition hyperfréquence 3035 et le module d'antenne d'émission 3030, permettant de restituer un signal hyperfréquence d'émission en ajustant le niveau du signal hyperfréquence généré par le module de transposition hyperfréquence 3035.

Une voie de réception 35 comprend un module de contrôle automatique de gain ou « CAG » 3051 recevant le signal hyperfréquence capté par le module d'antenne de réception 3050, en écho d'un signal émis. Le module de CAG 3051 est relié à un récepteur hyperfréquence 3053. Le récepteur hyperfréquence 3053 est relié à un module de transposition en fréquence intermédiaire 3055 dont la fréquence de référence est celle de l'onde OLR précitée, générée par le module de transposition de la fréquence de référence 3039. La transposition autour d'une fréquence intermédiaire permet de numériser le signal. L'utilisation d'un même oscillateur de référence pour générer la porteuse de l'onde émise et la fréquence de transposition en réception permet d'assurer la cohérence entre l'émission et la réception. Les synthèses de fréquence peuvent être assurées par multiplication de fréquence.

La fréquence porteuse du signal émis, notée Fp, la fréquence de l'oscillateur local en réception OLR et la fréquence intermédiaire Fi satisfont la relation suivante :

$$OLR = Fp - Fi \qquad\qquad (1).$$

Le module de transposition en fréquence intermédiaire 3055 est relié à un convertisseur analogique numérique ou « ADC » 3057. Le fonctionnement de l'ADC 3057 est décrit en détails ci-après en référence à la figure 6. Le signal numérique issu de l'ADC 3057 est traité par un module de traitement du signal 3059 restituant l'offset de fréquence dû au retard de l'écho et à l'effet Doppler. Plus de détails quant à la structure et au fonctionnement du module de traitement du signal 3059 sont décrits ci-après en référence à la figure 6.

L'utilisation d'un traitement numérique pour déterminer l'offset de fréquence permet de modifier les paramètres d'émission sans qu'une telle modification ne nécessite de changements de l'architecture matérielle des voies de réception. Ainsi, un système radar selon la présente invention est adaptable aux contraintes opérationnelles.

Les voies de réception 35 sont conçues de manière à être linéaires à faible bruit.

La figure 4 présente une courbe illustrant la forme d'onde d'un signal émis par un système d'assistance au pilotage selon un exemple de réalisation de l'invention.

Selon une spécificité de la présente invention, il est proposé que les vitesses de l'aéronef porteur du système et les distances par rapport au sol soient obtenues en un seul éclairement. A cette fin, il est proposé que le signal émis soit modulé en fréquence par une modulation déterminée permettant une extraction simultanée de la vitesse et de la distance. Dans un exemple non limitatif de la présente invention, il est possible que cette modulation soit linéaire selon deux pentes différentes, ou par exemple une modulation dite en « dent de scie ». D'autres formes d'ondes sont envisageables, par exemple, une modulation non linéaire de type chirp. La fréquence du signal émis en fonction du temps est illustrée par la figure 4. La forme d'onde illustrée par la figure 4 est présentée à titre d'exemple non limitatif de la présente invention.

Le signal émis peut être modulé consécutivement par une rampe de fréquence croissante suivie d'une rampe de fréquence décroissante, ou réciproquement. Dans l'exemple illustré par la figure 4, les rampes de fréquence croissante et décroissante ont la même pente en valeur absolue, et balayent la même bande de fréquence. Chaque rampe s'étale ainsi sur une durée égale à la moitié du temps d'éclairement, noté Te. Cette modulation permet non seulement d'obtenir les vitesses et les distances de l'aéronef par rapport au sol, mais aussi permet de réaliser des mesures de distances avec une grande précision.

La résolution en distance, notée Re, est définie par la relation suivante :

$$Re = \frac{c}{2.Bw} \qquad\qquad (2),$$

où c désigne la célérité de l'onde et Bw la bande de fréquence émise.

Par exemple, pour obtenir une résolution en distance de 4 centimètres, il est possible de choisir une rampe de fréquence de 750 MHz. Une interpolation après un traitement par FFT entre les cases fréquences peut permettre d'améliorer la résolution primaire d'un rapport 6. L'interpolation induit une erreur inférieure à 10% sur les fréquences calculées permettant d'obtenir une résolution en distance inférieure à 4 cm. Avantageusement, la génération des rampes peut être dynamiquement adaptée à la vitesse et à la distance mesurées. Une utilisation d"une bande passante supérieure pour la mesure de précision est par exemple possible.

La forme d'onde choisie permet de mesurer simultanément les vitesses et les distances, au moyen d'une unique mesure d'offsets de fréquence obtenue à partir d'un unique éclairement. L'extraction des mesures à partir du signal reçu en écho est explicitée ci-après en référence à la figure 5.

La figure 5 présente des courbes illustrant les formes d'ondes d'un signal émis et d'un signal reçu par un système d'assistance au pilotage selon un exemple de réalisation de l'invention.

Une première courbe 51 correspond à la forme d'onde du signal émis Se pendant un temps d'éclairement Te, déjà présente dans la figure 4 décrite ci-dessus. Une seconde courbe 52 correspond à la forme d'onde du signal reçu Sr. D'une manière typique, la seconde courbe 52 présente la même allure que la première courbe 51, mais la seconde courbe 52 est décalée dans le temps, et décalée en fréquence par rapport à la première courbe 51. Le point de départ de la seconde courbe 52 est décalé dans le temps d'un délai $\tau$ correspondant au retard entre l'émission et la réception, et décalé en fréquence de la fréquence Doppler $F_D$. Pendant une première période de temps Trm1, les deux courbes 51 et 52 sont simultanément croissantes. Pendant une seconde période de temps Trm2, les deux courbes 51 et 52 sont simultanément décroissantes. Si le point de départ de la première courbe 51 est arbitrairement placé sur l'origine du repère temps-fréquence, la fréquence du sommet de la première courbe 51 est égale à la bande passante du signal émis Bw. Le sommet de la seconde courbe 52 a pour ordonnée une fréquence égale à Bw + $F_D$.

Un premier offset de fréquence $\Delta$F1 correspond à la différence entre les deux courbes 51 et 52 lors de la première période de temps Trm1, et un second offset de fréquence $\Delta$F2 correspond à la différence entre les deux courbes 52 et 51 lors de la seconde période de temps Trm2.

Les offsets de fréquence peuvent se formuler suivant les relations suivantes, k désignant la pente des rampes de fréquence :

$$\Delta F1 = Se - Sr = k.\tau - F_D \qquad (3);$$

$$\Delta F2 = Sr - Se = k.\tau + F_D \qquad (4).$$

La somme des deux offsets de fréquence peut ainsi fournir la valeur du délai $\tau$, et la différence des deux offsets de fréquence peut fournir la valeur de la fréquence Doppler $F_D$.

Ainsi, à partir de trois faisceaux en émission, il est possible de déterminer simultanément les vitesses et les distances suivant les 3 axes, les vitesses étant déterminées par la relation suivante (À désignant la longueur d'onde de la porteuse du signal émis) :

$$V_D = F_D.\lambda/2 \qquad (5),$$

et les distances par la relation suivante :

$$D = \tau.c \qquad (6).$$

La détermination des offsets de fréquence est réalisée par le module de traitement du signal 3059 introduit précédemment en référence à la figure 3.

La figure 6 présente un diagramme illustrant de manière synoptique un bloc de traitement du signal compris dans une voie de réception d'un système d'assistance au pilotage selon un exemple de réalisation de l'invention.

Un module de traitement du signal 3059 reçoit en entrée le signal issu de l'ADC 3057. L'entrée du module de traitement du signal 3059 peut être reliée à un module de Détection Amplitude Phase ou « DAP » 63 transposant numériquement le signal sur deux voies en quadrature I et Q. Le module de DAP 63 peut être relié à un module de réplique 65 soustrayant fréquentiellement au signal reçu la réplique du signal émis et réduisant la bande de fréquence utile, et en parallèle à un module signe de phase 66, restituant une information représentative du signe de la phase du signal reçu en écho. Le module de réplique 65 est relié à un module de décimation 67 réduisant le nombre d'échantillons nécessaires pour le traitement par FFT. Le module de décimation 67 est relié à un module FFT 69 réalisant le traitement par FFT.

L'ADC 3057 numérise à une période d'échantillonnage Tech le signal hyperfréquence. Le signal analogique est transposé sur la fréquence intermédiaire Fi dont la valeur est supérieure ou égale à la bande de fréquence du signal analogique Bw. Cette fréquence peut typiquement être de l'ordre du gigahertz. La fréquence d'échantillonnage Fech et la bande de fréquence Bw peuvent être choisies de manière à satisfaire les relations suivantes :

$$\text{Fech} \geq 2.\text{Fi} + \text{Bw} \qquad (7),$$

$$\text{Bw} = 2.\,\text{Fi} \qquad (8).$$

De la sorte, les repliements de spectre peuvent être évités lors de l'échantillonnage.

Le module de DAP 63 transpose numériquement le signal sur deux voies en quadrature I et Q pour récupérer le signe du signal Doppler. La numérisation du signal permet une meilleure réjection de bande latérale unique, soit une meilleure quadrature, par rapport à un DAP analogique.

Le module de réplique 65 permet de soustraire fréquentiellement au signal reçu la réplique du signal émis. Cette opération permet de déterminer l'offset de fréquence engendré par le retard du signal reçu et par son décalage en fréquence dû à l'effet Doppler. Le résultat de ce traitement est compris dans une bande réduite par rapport aux signaux d'entrée.

Le module de décimation 67 permet de diminuer le nombre d'échantillons nécessaires au traitement par FFT. La fréquence d'échantillonnage avant décimation est donnée par la relation (7) ci-dessus.

Le rapport de décimation peut se formuler suivant la relation suivante :

$$\delta = \text{Bw}/2.\text{Bw'} \qquad (9),$$

où Bw' est la bande de fréquence réduite par le module de réplique 65.

L'intervalle d'échantillonnage réduit, noté Tech', conditionne la bande spectrale de traitement du module FFT 69.

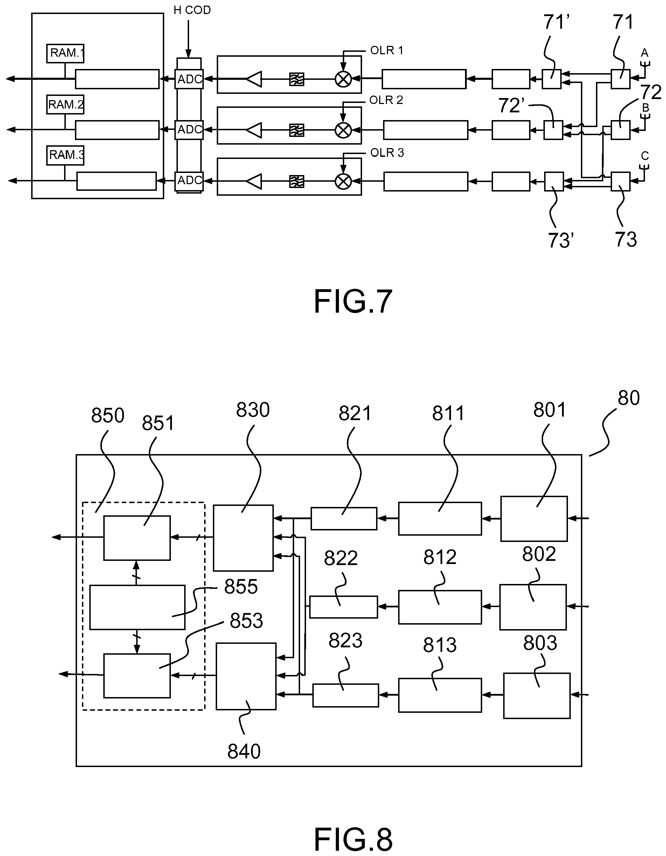

La figure 7 présente un diagramme illustrant de manière synoptique un bloc de réception multivoies dans un système d'assistance au pilotage selon un exemple de réalisation de l'invention.

La figure 3 décrite précédemment présente des voies uniques d'émission et de réception. Le diagramme présenté par la figure 7 illustre un exemple d'agencement de trois voies dans le bloc de réception du signal, selon un mode de réalisation avantageux.

Un bloc de réception multivoies 70 peut comprendre trois canaux de réception 71, 72, 73 indépendants reliés respectivement à trois antennes de réceptions A, B et C, ces antennes pouvant être des antennes distinctes ou bien être colocalisées. Selon l'exemple de mode de réalisation avantageux illustré par la figure, les canaux de réception 71, 72, 73 peuvent être reliés respectivement avec trois canaux de réception secondaires 71', 72', 73' indépendants, de sorte que les trois canaux de réception soient indépendants et interchangeables. Le premier canal de réception 71 peut en outre par exemple être couplé en hyperfréquences avec le deuxième canal de réception secondaire 72', le deuxième canal de réception 72 peut être en outre couplé en hyperfréquences avec le troisième canal de réception secondaire 73', et le troisième canal de réception 73 peut en outre par exemple être couplé avec le premier canal de réception 71. Grâce à cette architecture, lorsqu'un canal est défectueux, le canal secondaire couplé peut prendre le relais grâce au couplage hyperfréquence de ces canaux. Cette architecture présente de plus l'avantage d'éviter l'utilisation de commutateurs dont la fiabilité peut être incompatible des contraintes de sécurité de fonctionnement.

Afin d'éviter la superposition des spectres de deux signaux transitant par deux canaux différents, l'onde porteuse utilisée dans chacune des voies à l'émission peut être choisie de sorte à éviter la superposition des spectres de réception.

Cette architecture présente l'avantage d'améliorer la résilience, c'est-à-dire sa capacité à s'auto-dépanner ou encore de fonctionner dans un mode dégradé, d'un système de radar selon la présente invention, par rapport à des architectures de radars connues.

En aval des canaux de réception secondaires 71', 72', 73', chaque voie de réception peut en elle-même être similaire à la structure d'une voie de réception unique 35 décrite précédemment en référence à la figure 3.

Les modules de transposition en fréquence intermédiaire des trois voies de réception ont des fréquences de référence respectives OLR1, OLR2 et OLR3. Avantageusement, les ADC des trois voies peuvent être regroupées au sein d'un même module physique, commandé par des messages de commande H COD. Egalement, les modules de traitement du signal des trois voies peuvent être regroupés au sein d'un même module physique restituant les trois offsets de fréquence pour les trois voies.

Chaque module de traitement du signal peut être associé à une mémoire, respectivement RAM.1, RAM.2 et RAM.3 pour les trois voies. Les mémoires RAM.1, RAM.2 et RAM.3 permettent avantageusement d'enregistrer les données issues du traitement du signal. Elles sont par exemple configurées de manière à pouvoir enregistrer les données sur une période correspondant à la durée maximale des missions, typiquement de deux heures de vol environ. Les données enregistrées permettent alors par exemple un dépouillement a posteriori des heures de vol, de réaliser des simulations de situations de vol, ou encore des simulations au sol de différents scenarii de vol.

Une fois les mesures des offsets de fréquence réalisées, et le signe de la phase du signal déterminé, les données peuvent être exploitées pour les calculs de vitesses et de distances. Ceci peut être réalisé par un module de traitement de l'information, par exemple compris dans le module de gestion radar 201 décrit précédemment en référence à la figure 2.

La figure 8 présente un diagramme illustrant de manière synoptique un bloc de traitement de l'information compris dans un système d'assistance au pilotage selon un exemple de réalisation de l'invention.

Les offsets de fréquence restitués par les modules de traitement du signal des trois voies décrits ci-dessus, peuvent former les données d'entrées de trois blocs d'identification de la raie utile 801, 802, 803 pour les trois voies respectives, ces blocs pouvant être également désignés « blocs de traitement mer calme ».

Chaque bloc d'identification de la raie utile 801, 802, 803 est relié à un bloc d'interpolation de case fréquence 811, 812, 813 respectivement pour chaque voie. Chaque bloc d'interpolation de case fréquence 811, 812, 813 est relié à un bloc de calcul 821, 822, 823 de la fréquence Doppler $F_D$ et du délai $\tau$ de retard entre l'émission et la réception, respectivement pour chaque voie.

Les trois blocs de calcul 821, 822, 823 sont reliés à un bloc de calcul des vitesses 830 et un bloc de calcul des distances 840. Le bloc de calcul des vitesses 830 et le bloc de calcul des distances 840 sont reliés à un bloc de correction des erreurs systématiques 850, comprenant un bloc de correction des vitesses 851, un bloc de correction des distances 853, et une mémoire 855 contenant des informations intrinsèques liées à la configuration physique du système radar, notamment aux antennes, au socle du radar, etc. Les vitesses et distances corrigées restituées par le bloc de traitement de l'information peuvent être communiquées au cockpit de l'aéronef via un bus de données approprié.

Les calculs peuvent s'effectuer de la manière suivante :

- Identification de la raie utile par les blocs d'identification de la raie utile 801, 802, 803 de chaque offset de fréquence pour chaque voie, à partir d'un seuil de fréquence indépendant de l'amplitude du signal ;
- Interpolation par les blocs d'interpolation de case fréquence 811, 812, 813 ;
- Discrimination de la fréquence Doppler et du retard du signal écho par les blocs de calcul 821, 822, 823 ;
- Calculs des vitesses et distances à partir des résultats précédents par le bloc de calcul des vitesses 830 et le bloc de calcul des distances 840 ;
- Ajout des termes correctifs intrinsèques par le bloc de correction des erreurs systématiques 850.

La mise à jour des vitesses et des distances peut s'effectuer dès le rafraîchissement d'une des mesures d'offsets issues de l'une des voies de réception.

Les blocs d'interpolation de case fréquence 811, 812, 813 permettent d'augmenter la précision des paramètres de vol tels que la vitesse et l'altitude.

Ces calculs présentent la spécificité de permettre un traitement simultané des informations issues des trois voies. Ceci permet au pilote de l'aéronef d'avoir une connaissance des vitesses et des distances par rapport au sol dans les trois axes. De la sorte, il est possible d'intégrer à un système selon la présente invention des fonctions facilitant les missions de vol, telles que l'aide au vol stationnaire ou à l'atterrissage, permettant notamment de réduire les risques d'accidents. Des exemples de telles fonctions sont décrits ci-après.

Avantageusement, les séquences d'émission et de réception sur les différentes voies peuvent être optimisées.

Dans un premier exemple de réalisation, il est possible de réaliser des émissions et réceptions commutées sur trois voies.

Dans un deuxième exemple de réalisation, il est possible de réaliser des émissions et réceptions commutées sur trois voies, et de réaliser des phases de test d'intégrité ou « autotest » permanent.

Dans un troisième exemple de réalisation, il est possible de réaliser des émissions et réceptions simultanées sur trois voies.

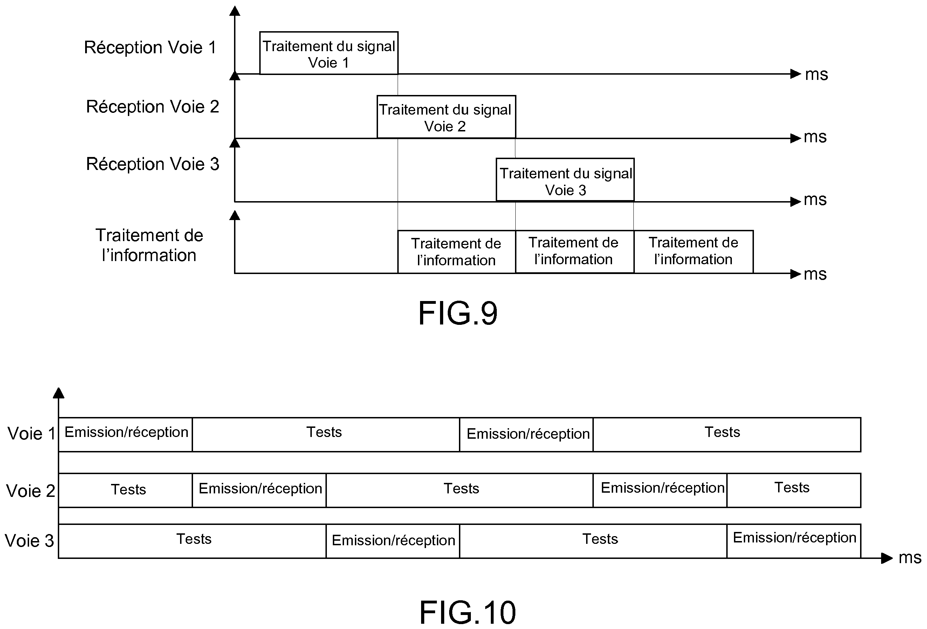

Les premier et deuxième exemples de réalisation susmentionnés sont décrits ci-après respectivement en référence aux figures 9 et 10.

En référence à la figure 9, le séquencement radar peut être décomposé en un cycle comportant trois étapes :

- une première étape d'émission du signal ;

- une deuxième étape de réception du signal ;
- une troisième étape de traitement numérique du signal.

Le cycle peut être du type « pipe-line » coordonné sur trois voies, ainsi que cela est illustré par le chronogramme de la figure 9.

En fonctionnement normal le radar émet et reçoit les signaux sur trois voies alternées, numérotées de 1 à 3, reliées respectivement à des antennes A, B et C.

Le traitement du signal sur chacune des voies peut être décalé avec un retard équivalent au temps d'éclairement de chacune des antennes.

Le traitement de l'information peut s'effectuer à chaque mesure d'offset de fréquence provenant de chacune des trois voies. Le traitement de l'information peut ainsi démarrer dès que la mesure d'offset de fréquence effectuée sur la première voie est disponible, et les phases de traitement de l'information en provenance des trois voies peuvent ainsi se succéder sans interruption sur un cycle.

La figure 10 illustre sous la forme d'un chronogramme le deuxième mode de réalisation susmentionné, dans lequel des émissions et réceptions commutées sur trois voies sont réalisées, à l'instar du premier exemple de réalisation décrit en référence à la figure 9, et où des phases d'autotest permanent sont en outre réalisées.

Lorsqu'une voie fonctionne en émission / réception, les deux autres voies sont inactives. Ce créneau d'inactivité peut avantageusement être utilisé pour réaliser les autotests en vol, selon le chronogramme présenté.

Ce mode de réalisation incluant des autotests permet de conférer une meilleure résilience au système radar.

Selon le troisième mode de réalisation susmentionné, il est possible de réaliser des émissions et réceptions simultanées sur trois voies.

Dans ce mode de réalisation, les trois voies d'émission peuvent émettre une onde de manière simultanée. Les ondes peuvent alors être transposées en bande X avec une porteuse propre à chacune des voies. Le décalage entre les porteuses est choisi supérieur à la bande de fréquence émise par chacune des voies afin d'éviter les recouvrements de spectre en réception. Les trois voies de réception permettent de traiter l'ensemble des informations contenues dans les trois signaux échos.

Un autre avantage d'un système selon la présente invention, est que celui-ci est évolutif. Il est par exemple possible de procéder à des mises à jour du système de traitement de l'information, plus particulièrement par exemple du bloc de correction des erreurs systématiques 850 décrit précédemment en référence à la figure 8, en chargeant un nouveau logiciel dans la mémoire 855.

Quelques exemples de fonctions pouvant être mises en œuvre dans un système d'assistance au pilotage selon la présente invention sont présentés ci-après.

Dans un premier exemple, un système d'assistance au pilotage selon la présente invention peut comprendre une fonction permettant un vol stationnaire asservi de l'aéronef, c'est-à-dire que la position fixe de l'aéronef soit asservie par les données issues des mesures de vitesses ou de distances dans les trois axes. Le système peut être configuré de manière à ce que toutes les fonctionnalités existantes des radars de navigation soient mises en œuvre, en présentant l'avantage supplémentaire que la résolution en vitesse peut être améliorée, grâce à une modulation des temps d'éclairements rendue possible dans un système selon la présente invention, ceux-ci pouvant par exemple être augmentés pour augmenter en tant que de besoin la résolution en vitesse.

Dans un deuxième exemple, un système d'assistance au pilotage selon la présente invention peut comprendre une fonction d'estimation de la distance entre l'aéronef et le sol, exploitant les mesures de distances permises par les trois faisceaux pour déterminer une hauteur moyenne de l'aéronef.

Un système d'assistance au pilotage selon la présente invention peut également comprendre une fonction d'estimation de la pente du sol par rapport à l'aéronef à partir des mesures de distances permises par les trois faisceaux.

Dans un troisième exemple, un système d'assistance au pilotage selon la présente invention peut comprendre une fonction d'estimation des inclinaisons de la zone d'atterrissage pour éviter que l'aéronef soit déséquilibré lors de la pose. La position du sol peut être définie par des mesures d'attitude de l'aéronef issues de capteurs dédiés conjuguées à des mesures des distances en trois points issues des trois faisceaux.

La précision peut typiquement être choisie inférieure à 4 cm afin d'obtenir la précision d'inclinaison minimale requise.

De la sorte, un système d'assistance au pilotage selon la présente invention peut permettre des atterrissages ou appontages dans les meilleures conditions, et notamment des atterrissages ou appontages parallèlement à la zone d'atterrissage.

Dans un quatrième exemple, un système d'assistance au pilotage selon la présente invention peut comprendre une fonction de visualisation de la surface d'atterrissage, via des moyens de visualisation adéquats ou une interface homme-machine adéquatement configurée à cet effet, par exemple via l'IHM 209 décrite précédemment en référence à la figure 2 ou via un dispositif d'affichage disposé dans le cockpit de l'aéronef. Par exemple, lors de la descente de l'aéronef, la position en X, Y par rapport au sol peut être maintenue par un asservissement en vitesse, grâce aux mesures de vitesses dans les trois axes permises par le système radar. Avantageusement, ces informations peuvent être redondées par des informations issues d'un système de positionnement par satellites. Les distances de l'aéronef par rapport au sol issues des trois faisceaux du système radar permettent de contrôler la hauteur et l'attitude de l'aéronef par rapport au sol, et les moyens de visualisation peuvent permettre au pilote de visualiser la situation.

Dans un cinquième exemple, un système d'assistance au pilotage selon la présente invention peut comprendre une fonction permettant d'éviter à l'aéronef d'atterrir sur des aspérités ou sur des objets compromettant la stabilité de l'aéronef au sol. Des enregistrements des mesures de hauteurs issues des faisceaux lors de la descente de l'aéronef peuvent permettre la construction d'une topographie du sol, le terme « sol » étant à entendre selon son acception la plus large, et pouvant être défini par la surface d'objets tels que des véhicules, ou des surfaces très inclinées telles que des falaises ou flancs de montagnes. La topographie ainsi obtenue peut être comparée avec les points d'atterrissage ou d'appui de l'aéronef, et des alertes peuvent être générées en cas d'incompatibilité.

Dans un sixième exemple, un système d'assistance au pilotage selon la présente invention peut comprendre une fonction permettant de faciliter les atterrissages sur des plates-formes mouvantes. L'assiette de l'aéronef peut être adaptée aux inclinaisons de la plate-forme d'atterrissage grâce à une mesure d'assiette issue de capteurs dédiés. Les distances par rapport au sol issues des trois faisceaux du système radar peuvent alors permettent de contrôler la hauteur et l'attitude de l'aéronef par rapport au sol. La situation peut alors être présentée au pilote au moyen d'une interface homme-machine adéquatement configurée, par exemple l'IHM 209 décrite précédemment en référence à la figure 2. Avantageusement, des moyens de détermination peuvent permettre d'évaluer un instant de pose à partir des variations du plan de pose, déterminées à partir desdites mesures de distances et de vitesses dans les trois axes. La demande de brevet française publiée sous la référence FR 2944128 décrit par exemple un procédé d'aide à l'appontage, selon lequel une commande peut être envoyée à l'aéronef pour amorcer une descente jusqu'à un point d'appontage, lorsque la hauteur de la plate-forme d'atterrissage est au maximum d'une courbe typique représentant la hauteur de la plateforme en fonction du temps lorsque l'aéronef est en position de préparation de la phase d'appontage, à un premier instant. L'aéronef doit alors se déplacer suffisamment rapidement pour rallier le point d'appontage à un second instant, de préférence lorsque la plate-forme est à son point le plus bas, sa vitesse de pilonnement étant sensiblement nulle en ce second instant. Lorsque l'aéronef se pose pendant la phase descendante du pilonnement de la plate-forme, le choc est amorti ; lorsque l'aéronef se pose au second instant précité, on est ramené au cas d'un atterrissage. De préférence, la fréquence de rafraîchissement des informations transmises à l'aéronef est de l'ordre d'au moins dix fois la fréquence des mouvements subis par la plate-forme mobile, afin d'anticiper correctement le moment d'appontage opportun et de pouvoir réajuster fréquemment la trajectoire de l'aéronef jusqu'à l'appontage.

Le système selon l'invention décrite dans la demande de brevet FR 2944128 précitée peut notamment permettre de déterminer, à partir de la plate-forme, la position de l'aéronef et l'inclinaison de la plateforme et de transmettre à l'aéronef des commandes de guidage pour lui permettre de se poser en sécurité.

En outre il est à observer qu'un système selon la présente invention permet de déterminer à partir de l'aéronef la position et l'inclinaison de la plateforme d'appontage. Avantageusement l'aéronef peut être autonome dans ces mesures. Cela permet de réduire les coûts d'équipement de la plateforme et de transmission entre la plateforme et l'aéronef. Cette réduction peut être considérée lorsque qu'un aéronef peut atterrir sur plusieurs plateformes. La fiabilité du système est également augmentée.

Dans un septième exemple, un système d'assistance au pilotage selon la présente invention peut comprendre une fonction permettant un vol stationnaire ou un atterrissage sur une zone désignée au sol par un opérateur. Un opérateur peut par exemple désigner le point d'approche et d'atterrissage par une ou plusieurs balises radio, positionnées. Le système d'assistance au pilotage peut alors être configuré pour guider l'aéronef par rapport à la balise radio par goniométrie ou écartométrie entre deux ou trois faisceaux formés en réception par le système radar.

Une ou plusieurs balises radio peuvent également être larguées par le pilote en un ou plusieurs points ceci dans toutes les conditions atmosphériques y compris dans des situations de brownout.

A partir des mesures faites par le système radar et un ou plusieurs balise(s), des moyens adéquats peuvent permettre de réaliser une extrapolation des mouvements de la plateforme sur laquelle d'aéronef doit se poser. Il est ainsi rendu possible de déterminer le moment optimal de pose de l'aéronef, et de permettre l'affichage d'informations y correspondant au pilote, ou bien de contrôler un dispositif de pilote automatique en conséquence.

Par exemple, le système peut comprendre des moyens de réception dans au moins deux faisceaux, et des moyens pour réaliser un centrage par goniométrie ou écartométrie d'un signal reçu d'une balise de positionnement disposée au sol ou sur un porteur émettant un signal d'une fréquence déterminée, pour permettre un guidage en approche. Dans un tel mode de réalisation, des phases d'écoute du signal émis par la balise peuvent s'intercaler entre des phases successives d'émission selon les au moins trois faisceaux séquentiellement ou simultanément sur les trois faisceaux.

Ou encore, le système peut comprendre des moyens de réception dans au moins trois faisceaux, et des moyens pour réaliser un centrage par goniométrie ou écartométrie d'un signal reçu une balise de positionnement disposée au sol ou sur un porteur émettant un signal d'une fréquence déterminée, pour permettre un atterrissage ou un appontage de précision au dessus de la balise, ou au voisinage de la balise.

Avantageusement encore, le système peut comprendre des moyens de réception dans au moins deux faisceaux, et des moyens pour réaliser un centrage par goniométrie et/ou écartométrie de deux ou plus signaux reçus de balises de positionnement disposées au sol ou sur un porteur émettant des signaux de fréquences déterminées, pour permettre un atterrissage ou un appontage de précision par rapport aux balises.

Avantageusement, un système selon l'un des modes de réalisation de l'invention permet de s'affranchir de dispositifs de positionnement par satellites, s'il comprend des moyens appropriés d'hybridation des mesures de vitesses et de distances avec les données d'une centrale inertielle, même de précision relativement faible, par exemple avec les données d'un système du type AHRS susmentionné.

Avantageusement, un système selon l'un des modes de réalisation de l'invention peut comprendre des moyens d'hybridation permettant de recaler une centrale de navigation à partir des mesures des vitesses et des distances.

Avantageusement, un système selon l'un des modes de réalisation de l'invention peut en outre comprendre des moyens d'hybridation additionnels permettant avec un modèle numérique de terrain, usuellement désigné par le sigle « NMT ». Une telle hybridation permet par exemple de consolider les données mesurées, ou bien d'augmenter la précision de la navigation, ou encore par exemple, de détecter des objets ou des véhicules présents sur une zone.

Il est à observer que dans les modes de réalisation décrits à titre d'exemples ci-dessus, les moyens de mesure utilisés sont des moyens de type radar ; cependant d'autres moyens peuvent être utilisés, tels que des radioaltimètres, des moyens de mesure optique, des moyens de mesure sonore par exemple.

## Revendications

1. Système d'assistance au pilotage d'un aéronef (1) en phase d'atterrissage ou d'appontage, comprenant des moyens de mesure (20) aptes à réaliser des mesures de distances de l'aéronef (1) par rapport au sol, et des mesures de vitesses de l'aéronef (1) par rapport au sol, sur au moins trois voies d'émission (33) et de réception (35) correspondant à au moins trois axes (Da, Db, Dc) respectifs, les au moins trois voies d'émission (33) étant indépendantes, ledit système comportant en outre un modèle numérique de terrain, et des moyens d'hybridation additionnels desdites mesures de distances et de vitesses relatives de l'aéronef (1) par rapport à la zone d'atterrissage ou d'appontage avec les données dudit modèle numérique de terrain;
ledit système étant **caractérisé en ce qu'**il comporte également des moyens de réception dans au moins deux faisceaux, configurés pour réaliser un centrage par goniométrie ou écartométrie sur une balise de positionnement disposée au sol ou sur un porteur, ladite balise émettant un signal de fréquence déterminée, ledit centrage permettant un guidage en approche.

2. Système d'assistance au pilotage selon la revendication 1, **caractérisé en ce qu'**il comprend des moyens de réception dans au moins trois faisceaux configurés pour réaliser un centrage par goniométrie ou écartométrie d'un signal reçu d'une balise de positionnement disposée au sol ou sur un porteur émettant un signal d'une fréquence déterminée, pour permettre un atterrissage ou un appontage de précision au-dessus de la balise, ou au voisinage de la balise.

3. Système d'assistance au pilotage suivant l'une des revendications 1 ou 2, **caractérisé en ce qu'**il comporte en outre une fonction de détermination d'une pente du sol par rapport à l'aéronef (1) à partir des mesures de distances de l'aéronef (1) par rapport au sol.

4. Système d'assistance au pilotage suivant la revendication 3, **caractérisé en ce qu'**il comprend en outre des moyens d'alerte, aptes à être activés lorsqu'une pente du sol par rapport à l'aéronef dépasse une valeur de seuil déterminée.

5. Système d'assistance au pilotage selon l'une quelconque des revendications précédentes, **caractérisé en ce qu'**il comprend en outre une fonction d'estimation des inclinaisons d'une zone d'approche ou d'atterrissage de l'aéronef à partir desdites mesures de distances dans les trois axes.

6. Système d'assistance au pilotage selon la revendication 5, comprenant en outre des moyens de détermination d'un instant de pose à partir des variations de position et d'inclinaison de la zone d'atterrissage ou d'appontage, déterminées à partir desdites mesures de distances et de vitesses dans les trois axes.

7. Système d'assistance au pilotage selon l'une quelconque des revendications précédentes, **caractérisé en ce que** les moyens de mesure comprennent un système radar (20), comprenant au moins une antenne d'émission (2030) configurée de manière à produire au moins trois faisceaux sur lesdites au moins trois voies, au moins une antenne de réception (2050) configurée pour recueillir les signaux reçus en écho, et des moyens de gestion radar (201) configurés pour extraire à partir des signaux reçus, des mesures de vitesses et de distances de l'aéronef (1) par rapport au sol, chaque distance étant déterminée par une mesure du retard du signal reçu en écho d'un signal émis, et chaque vitesse étant déterminée par une mesure du décalage en fréquence entre le signal émis et le signal reçu en écho.

8. Système d'assistance au pilotage selon la revendication 7, **caractérisé en ce que** le système radar (20) est configuré de manière à ce que la forme d'onde des signaux émis comprend une première rampe de fréquence croissante ou décroissante à pente constante sur une bande de fréquence déterminée et s'étalant sur une période correspondant à la moitié d'un temps d'éclairement (Te), suivie d'une seconde rampe de fréquence respectivement décroissante ou croissante à pente constante sur ladite bande de fréquence déterminée et s'étalant sur une période correspondant à la moitié du temps d'éclairement (Te), la distance et la vitesse sur une voie étant déterminées en un seul éclairement, respectivement à partir de la somme entre les différences (ΔF1, ΔF2) entre les signaux émis (Se) et reçus (Sr) pendant une première période de temps (Trm1) durant laquelle les formes d'ondes des signaux émis et des signaux reçus ont simultanément la forme d'une rampe croissante, et à partir de la différence entre les différences (ΔF1, ΔF2) entre les signaux émis (Se) et reçus (Sr) pendant une seconde période de temps (Trm2) durant laquelle les formes d'ondes des signaux émis et des signaux reçus ont simultanément la forme d'une rampe décroissante.

9. Système d'assistance au pilotage selon l'une quelconque des revendications 7 et 8, **caractérisé en ce que** les périodes d'émission et de réception sont réalisées de manière simultanée sur les trois voies, chaque voie étant associée à une fréquence différente du signal d'émission.

10. Système d'assistance au pilotage selon l'une quelconque des revendications 7 à 9, **caractérisé en ce que** lorsque sur une voie donnée aucune émission ou réception n'est réalisée, des moyens de test réalisent un test d'intégrité de ladite voie donnée.

11. Système d'assistance au pilotage suivant l'une quelconque des revendications 7 à 10, **caractérisé en ce que** chaque voie de réception comprend un canal de réception (71, 72, 73) et un canal de réception secondaire (71', 72', 73'), un canal de réception (71, 72, 73) étant relié à deux canaux de réception secondaires (71', 72', 73') de manière à former une redondance.

12. Système d'assistance au pilotage suivant l'une quelconque des revendications précédente, **caractérisé en ce qu'**il comprend en outre une interface homme-machine (209), configurée pour présenter une représentation graphique du sol par rapport à l'aéronef (1) établie à partir desdites mesures de distances et de vitesse.

13. Système d'assistance au pilotage suivant l'une quelconque des revendications précédentes, **caractérisé en ce qu'**il comprend en outre une fonction d'estimation de la distance entre l'aéronef (1) et le sol apte à déterminer une hauteur moyenne de l'aéronef (1) à partir desdites mesures de distances dans les trois axes.

14. Système d'assistance au pilotage suivant l'une quelconque des revendications précédentes, **caractérisé en ce qu'**il comprend en outre une fonction permettant un vol stationnaire asservi de l'aéronef (1), par laquelle la position fixe de l'aéronef (1) est asservie par les données issues des mesures de vitesses et de distances dans les trois axes.

**Patentansprüche**

1. Assistenzsystem zum Steuern eines Luftfahrzeugs (1) in der Lande- oder Decklandungsphase, beinhaltend Messmittel (20), welche in der Lage sind, Abstandsmessungen vom Luftfahrzeug (1) zum Boden vorzunehmen, und Geschwindigkeitsmessungen vom Luftfahrzeug (1) zum Boden, auf mindestens drei Sende- (33) und Empfangswege (35), welche mindestens drei jeweiligen Achsen (Da, Db, Dc) entsprechen, wobei die mindestens drei Sendewege (33) unabhängig sind, wobei das System zudem ein digitales Geländemodell und zusätzliche Hybridisierungsmittel der relativen Abstands- und Geschwindigkeitsmessungen vom Luftfahrzeug (1) zur Lande- oder Decklandungszone mit den Daten des digitalen Geländemodells beinhaltet;
wobei das System **dadurch gekennzeichnet ist, dass** es zudem Empfangsmittel in mindestens zwei Strahlen enthält, welche dazu konfiguriert sind, eine Zentrierung anhand von Goniometrie oder Abweichungsmessung an einer Positionierungsbake vorzunehmen, welche am Boden oder auf einem Träger angeordnet ist, wobei die Bake ein Signal mit einer bestimmten Frequenz aussendet, wobei die Zentrierung eine Anflugsführung ermöglicht.

2. Assistenzsystem zum Steuern nach Anspruch 1, **dadurch gekennzeichnet, dass** es Empfangsmittel in mindestens drei Strahlen beinhaltet, welche konfiguriert sind, um eine Zentrierung anhand von Goniometrie oder Abweichungsmessung eines von einer Positionierungsbake, welche am Boden oder auf einem Träger positioniert ist und ein Signal mit einer bestimmten Frequenz aussendet, empfangenen Signals vorzunehmen, um eine Präzision-Landung oder -Decklandung oberhalb der Bake oder in der Nähe der Bake zu ermöglichen.

3. Assistenzsystem zum Steuern nach einem der Ansprüche 1 oder 2, **dadurch gekennzeichnet, dass** es zudem eine Funktion zur Bestimmung einer Neigung des Bodens in Bezug auf das Luftfahrzeug (1) anhand der Abstandsmessungen vom Luftfahrzeug (1) zum Boden beinhaltet

4. Assistenzsystem zum Steuern nach Anspruch 3, **dadurch gekennzeichnet, dass** es zudem Alarmierungsmittel beinhaltet, welche in der Lage sind, aktiviert zu werden, wenn eine Neigung des Bodens in Bezug auf das Luftfahrzeug einen bestimmten Schwellenwert überschreitet.

5. Assistenzsystem zum Steuern nach einem der vorhergehenden Ansprüche, **dadurch gekennzeichnet, dass** es zudem eine Schätzfunktion der Neigungen einer Anflugszone oder einer Landezone des Luftfahrzeugs anhand der Abstandsmessungen in den drei Achsen beinhaltet.

6. Assistenzsystem zum Steuern nach Anspruch 5, zudem beinhaltend Mittel zum Bestimmen eines Aufsetzzeitpunktes anhand der Positions- und Neigungsvariationen der Lande- oder der Decklandungszone, welche anhand der Abstands- und Geschwindigkeitsmessungen in den drei Achsen bestimmt werden.

7. Assistenzsystem zum Steuern nach einem der vorhergehenden Ansprüche, **dadurch gekennzeichnet, dass** die Messmittel ein Radarsystem (20) beinhalten, welches mindestens eine Sendeantenne (2030) beinhaltet, welche konfiguriert ist, um mindestens drei Strahlen in den mindestens drei Wegen zu erzeugen, mindestens eine Empfangsantenne (2050), welche konfiguriert ist, um die als Echo empfangenen Signale aufzunehmen, und Radar-Managementmittel (201), welche konfiguriert sind, um anhand der empfangenen Signale Geschwindigkeits- und Abstandsmessungen vom Luftfahrzeug (1) zum Boden zu extrahieren, wobei jeder Abstand durch eine Messung der Verzögerung des als Echo eines gesendeten Signals empfangenen Signals bestimmt wird, und jede Geschwindigkeit durch eine Messung der Frequenzverschiebung zwischen dem gesendeten Signal und dem als Echo empfangenen Signal bestimmt wird.

8. Assistenzsystem zum Steuern nach Anspruch 7, **dadurch gekennzeichnet, dass** das Radarsystem (20) so konfiguriert ist, dass die Wellenform der gesendeten Signale eine erste ansteigende oder absteigende Frequenzrampe mit konstanter Neigung über ein bestimmtes Frequenzband beinhaltet und sich über einen Zeitraum erstreckt, welcher einer Hälfte einer Beleuchtungszeit (Te) entspricht, gefolgt von einer zweiten Frequenzrampe, welche jeweils ansteigend oder absteigend über das bestimmte Frequenzband ist und sich über einen Zeitraum erstreckt, welcher der Hälfte der Beleuchtungszeit (Te) entspricht, wobei der Abstand und die Geschwindigkeit auf einem Weg in einer einzigen Beleuchtung bestimmt werden, jeweils anhand der Summe zwischen den Differenzen ($\Delta$F1, $\Delta$F2) zwischen den gesendeten (Se) und den empfangenen (Sr) Signalen über einen ersten Zeitraum (Trm1), in dessen Verlauf die Wellenformen der gesendeten Signale und der empfangenen Signale gleichzeitig die Form einer ansteigenden Rampe aufweisen, und anhand der Differenz zwischen den Differenzen ($\Delta$F1, $\Delta$F2) zwischen den gesendeten (Se) und den empfangenen Signalen (Sr) über einen zweiten Zeitraum (Trm2), in dessen Verlauf die Wellenformen der gesendeten Signale und der empfangenen Signale gleichzeitig die Form einer absteigenden Rampe aufweisen.

9. Assistenzsystem zum Steuern nach einem der Ansprüche 7 und 8, **dadurch gekennzeichnet, dass** die Sende- und die Empfangszeiträume gleichzeitig auf den drei Wegen bewerkstelligt werden, wobei jeder Weg einer unterschiedlichen Frequenz des Sendesignals zugeordnet ist.

10. Assistenzsystem zum Steuern nach einem der Ansprüche 7 bis 9, **dadurch gekennzeichnet, dass**, wenn auf einem gegebenen Weg keine Sendung oder kein Empfang erfolgt, Testmittel einen Integritätstest des gegebenen Wegs durchführen.

11. Assistenzsystem zum Steuern nach einem der Ansprüche 7 bis 10, **dadurch gekennzeichnet, dass** jeder Empfangsweg einen Empfangskanal (71, 72, 73) und einen sekundären Empfangskanal (71', 72', 73') beinhaltet, wobei ein Empfangskanal (71, 72, 73) mit zwei sekundären Empfangskanälen (71', 72', 73') verbunden ist, um eine Redundanz zu bilden.

**12.** Assistenzsystem zum Steuern nach einem der vorhergehenden Ansprüche, **dadurch gekennzeichnet, dass** es zudem eine Mensch-Maschine-Schnittstelle (209) beinhaltet, welche konfiguriert ist, um eine grafische Darstellung des Bodens in Bezug auf das Luftfahrzeug (1) darzustellen, welche anhand der Abstands- und der Geschwindigkeitsmessungen erstellt wird.

**13.** Assistenzsystem zum Steuern nach einem der vorhergehenden Ansprüche, **dadurch gekennzeichnet, dass** es zudem eine Schätzfunktion des Abstandes zwischen dem Luftfahrzeug (1) und dem Boden beinhaltet, welche in der Lage ist, eine mittlere Höhe des Luftfahrzeugs (1) anhand der Abstandsmessungen in den drei Achsen zu bestimmen.

**14.** Assistenzsystem zum Steuern nach einem der vorhergehenden Ansprüche, **dadurch gekennzeichnet, dass** es zudem eine Funktion beinhaltet, welche einen nachgeführten stationären Flug des Luftfahrzeugs (1) ermöglicht, durch welche die feste Position des Luftfahrzeugs (1) anhand der Daten aus den Geschwindigkeits- und Abstandsmessungen in den drei Achsen nachgeführt wird.


## Claims

**1.** Piloting assistance system for an aircraft (1) in a landing or deck-landing phase, comprising measuring means (20) which are capable of taking distance measurements from the aircraft (1) to the ground, and measurements of the aircraft (1) speed with respect to the ground, on at least three transmission (33) and reception (35) channels corresponding to at least three respective axes (Da, Db, Dc), the at least three transmission channels (33) being independent, said system further comprising a digital ground model, and additional hybridization means for said relative distance and speed measurements from the aircraft (1) to the landing or deck-landing area with the data from said digital ground model;
said system being **characterized in that** it also comprises reception means in at least two beams, configured to implement centring by means of direction-finding or by ecartometry measurement achieved on a positioning beacon arranged on the ground or on a carrier, said beacon transmitting a signal at a determined frequency, said centring allowing approach guidance.

**2.** Piloting assistance system according to claim 1, **characterized in that** it comprises reception means in at least three beams configured to implement centring by means of direction-finding or by ecartometry measurement of a signal received from a positioning beacon arranged on the ground or on a carrier transmitting a signal at a determined frequency, in order to allow precision landing or deck-landing above the beacon, or close to the beacon.

**3.** Piloting assistance system according to any one of claims 1 or 2, **characterized in that** it further comprises a function for determining a slope of the ground relative to the aircraft (1) from the distance measurements from the aircraft (1) to the ground.

**4.** Piloting assistance system according to claim 3, **characterized in that** it further comprises warning means, which are capable of being activated when a slope of the ground relative to the aircraft exceeds a determined threshold value.

**5.** Piloting assistance system according to any one of the preceding claims, **characterized in that** it further comprises a function for estimating the slopes of an approach or landing area for the aircraft from said distance measurements in the three axes.

**6.** Piloting assistance system according to claim 5, further comprising means for determining a touchdown instant from the variations of the position and slope of the landing or deck-landing area, which are determined from said distance and speed measurements in the three axes.

**7.** Piloting assistance system according to any one of the preceding claims, **characterized in that** the measuring means comprise a radar system (20), comprising at least one transmission antenna (2030) configured so as to produce at least three beams on said at least three channels, at least one reception antenna (2050) configured to collect the signals received as an echo, and radar management means (201) configured to extract speed and distance measurements from the aircraft (1) to the ground from the received signals, each distance being determined by a measurement of the delay between the signal received as an echo of a transmitted signal, and each speed being determined by a measurement of the frequency shift between the transmitted signal and the signal received as an echo.

8. Piloting assistance system according to claim 7, **characterized in that** the radar system (20) is configured in such a way that the waveform of the transmitted signals comprises a first frequency ramp increasing or decreasing with a constant slope over a determined frequency band and spreading over a period corresponding to half an illumination time (Te), followed by a second frequency ramp respectively decreasing or increasing with a constant slope over said determined frequency band and spreading over a period corresponding to half the illumination time (Te), with the distance and speed on a channel being determined in a single illumination, respectively from the sum of the differences ($\Delta$F1, $\Delta$F2) between the transmitted (Se) and received (Sr) signals over a first period of time (Trm1) during which the waveforms of the transmitted signals and of the received signals simultaneously have the shape of an increasing ramp, and from the difference between the differences ($\Delta$F1, $\Delta$F2) between the transmitted (Se) and received (Sr) signals over a second period of time (Trm2) during which the waveforms of the transmitted signals and of the received signals simultaneously have the shape of a decreasing ramp.

9. Piloting assistance system according to any one of claims 7 and 8, **characterized in that** the transmission and reception periods are implemented simultaneously on the three channels, each channel being associated with a different frequency of the transmission signal.

10. Piloting assistance system according to any one of claims 7 to 9, **characterized in that** when no transmission or reception is implemented on a given channel, test means perform an integrity test of said given channel.

11. Piloting assistance system according to any one of claims 7 to 10, **characterized in that** each reception channel comprises a reception channel (71, 72, 73) and a secondary reception channel (71', 72', 73'), a reception channel (71, 72, 73) being linked to two secondary reception channels (71', 72', 73') so as to form a redundancy.

12. Piloting assistance system according to any one of the preceding claims, **characterized in that** it further comprises a man/machine interface (209), which is configured to show a graphical representation of the ground relative to the aircraft (1) that has been established from said distance and speed measurements.

13. Piloting assistance system according to any one of the preceding claims, **characterized in that** it further comprises a function for estimating the distance between the aircraft (1) and the ground that is capable of determining an average altitude of the aircraft (1) from said distance measurements in the three axes.

14. Piloting assistance system according to any one of the preceding claims, **characterized in that** it further comprises a function allowing servo-controlled stationary flight of the aircraft (1), by means of which function the fixed position of the aircraft (1) is servo-controlled by the data from the speed and distance measurements in the three axes.

FIG.1

FIG.2

FIG.3

FIG.4

FIG.5

FIG.6

FIG.7

FIG.8

Réception Voie 1 | Traitement du signal Voie 1 | ms

Réception Voie 2 | Traitement du signal Voie 2 | ms

Réception Voie 3 | Traitement du signal Voie 3 | ms

Traitement de l'information | Traitement de l'information | Traitement de l'information | Traitement de l'information | ms

## FIG.9

Voie 1 | Emission/réception | Tests | Emission/réception | Tests

Voie 2 | Tests | Emission/réception | Tests | Emission/réception | Tests

Voie 3 | Tests | Emission/réception | Tests | Emission/réception | ms

## FIG.10

**EP 2 605 037 B1**

## RÉFÉRENCES CITÉES DANS LA DESCRIPTION

**Documents brevets cités dans la description**

- US 3362024 A
- US 2003102999 A1
- US 3239837 A
- US 3185981 A
- US 3088109 A
- EP 2237067 A1
- FR 2944128